# EUROPÄISCHE PATENTSCHRIFT

(11) **EP 3 504 757 B1**
(45) Veröffentlichungstag und Bekanntmachung des Hinweises auf die Patenterteilung: **07.10.2020**
(21) Anmeldenummer: 17767732.5
(22) Anmeldetag: 25.08.2017
(51) Int. Cl.: H01R 12/72, H01R 13/50, H01R 43/24, B29C 45/17

(54) **STECKERLEISTE FÜR EIN STEUERGERÄT**
CONNECTOR STRIP FOR A CONTROL APPLIANCE
BARRETTE DE CONNEXION POUR APPAREIL DE COMMANDE

(30) Priorität: 29.08.2016 DE 102016216177
(43) Veröffentlichungstag der Anmeldung: 03.07.2019
(73) Patentinhaber: Robert Bosch GmbH, 70442 Stuttgart (DE)
(72) Erfinder: FRIESS, Gerald, 71723 Grossbottwar (DE)
(86) Internationale Anmeldenummer: PCT/EP2017/071432
(87) Internationale Veröffentlichungsnummer: WO 2018/041735

(56) Entgegenhaltungen:
- EP-A1- 3 050 691
- US-A1- 2011 240 361

## Beschreibung

Die Erfindung geht aus von einer Steckerleiste für ein Steuergerät nach der Gattung des unabhängigen Patentanspruchs 1.

Aus dem Stand der Technik bekannte Steckerleisten werden in der Regel mittels Kunststoffspritzgießtechnik hergestellt. Diese bekannten Steckerleisten werden bis zu einer bestimmten Länge "monolithisch", bzw. kompakt aus einem Kunststoffbauteil hergestellt. Daher sind becherartige Steckermodule direkt an einen Kontaktträger angespritzt, in welchem eine Mehrzahl von Kontaktelementen über eine Teillänge derselben eingebettet und gelagert ist. Genereller Trend bei Fahrzeugherstellern ist, dass solche Steckerleisten bei einem Einsatz in Steuergeräten immer hochpoliger und dadurch unweigerlich immer größere Abmessungen erhalten. Mittels Pinminiaturisierung wird beispielsweise versucht diesem Trend gerecht zu werden. Ab einer gewissen Größe können die Steckerleisten jedoch nicht mehr "monolithisch" und vor allem nicht verzugsarm und somit nicht in den geforderten Montagetoleranzen hergestellt werden. So können "monolithisch" ausgelegte hochpolige Steckerleisten für Steuergeräte eine sehr starke Verzugsneigung von bis 1,7mm in der Bauteilmitte aufweisen. Dadurch können sich Verarbeitungsprobleme für die Einzelkomponenten beim Bestücken auf der Leiterplatte oder beim Zusammenspiel mit den weiteren Gehäuseteilen des Steuergeräts sowie bei Folgeprozessen wie Dichtheitsprüfungen oder optischen Kontrollen im Fertigungswerk ergeben.

Daher ist aus dem Stand der Technik bekannt, hochpolige Steckerleisten "modular" auszuführen. Bei solchen hochpoligen Steckerleisten wird ein Grundkörperrahmen als sogenannter "Modulträger" mit Durchbrüchen vorgespritzt, in welche dann nachträglich separate Steckermodule eingeschweißt werden, welche unterschiedliche Abmessungen aufweisen können.

Aus der EP 3 050 691 A1 ist eine Umhüllung eines Steckerteils für eine elektrische und/oder optische Steckverbindung und/oder eine Umhüllung eines Kabels bekannt. Hierbei weist die Umhüllung ein thermoplastische Material auf, in welchem Gaseinschlüsse vorhanden sind. Die Gaseinschlüsse sind als Vielzahl von über die Umhüllung willkürlich verteilten Gasbläschen ausgebildet und weisen einen Durchmesser zwischen 10µm und 1,5mm auf. Durch die Gaseinschlüsse kann die Elastizität der Umhüllung beeinflusst werden.

Aus der US 2011/0240361 A1 ist ein Gehäuse für ein elektrisches Gerät bekannt, welches eine Steckerleiste mit mehreren einseitig offenen Steckermodulen umfasst, welche geeignet sind, jeweils einen Gegenstecker aufzunehmen.

Aus der DE 298 21 737 U1 ist eine gattungsgemäße Steckerleiste zur Befestigung an Leiterplatten bekannt. Die Steckerleiste umfasst einen Kontaktträger aus elektrischem Isoliermaterial. Im Kontaktträger ist eine Vielzahl von reihenförmig angeordneten Kontaktelementen über eine Teillänge derselben eingebettet und gelagert. Die Kontaktelemente weisen Kontaktabschnitte auf, welche in einem einseitig offenen Führungskanal der Steckerleiste freiliegend angeordnet sind. Diese Kontaktabschnitte sind zur Kontaktierung mit Gegenkontaktelementen eines in den Führungskanal einschiebbaren Gegensteckers geeignet. Zudem weisen die Kontaktelemente zur Leiterplatte hinführende und dort mit Leiterbahnen verbindbare Anschlussabschnitte auf. Die Anschlussabschnitte treten an einer Rückseite des Kontaktträgers aus und sind dann zur Leiterplatte hin abgebogen und durch zugeordnete Positionierungsöffnungen einer Führungsleiste geführt. Die durch die Führungsleiste hindurchtretenden Teile der Anschlussabschnitte sind von einer Oberseite der Leiterplatte her in zugehörige Öffnungen eingeführt.

### Offenbarung der Erfindung

Die Steckerleiste für ein Steuergerät mit den Merkmalen des unabhängigen Patentanspruchs 1 hat den Vorteil, dass durch die Hohlraumstruktur große hochpolige Abmessungen mit bis zu 340 oder mehr Kontaktelementen "monolithisch" ohne aufwendigen und zusätzlichen Schweißprozess gefertigt werden können. Zudem kann das "monolithische" Kunststoffbauteil verzugsarm hergestellt werden. Dadurch kann bei hochpoligen Steckerleisten in vorteilhafter Weise auf einen mehrteiligen Aufbau verzichtet werden, welcher aus einem Modulträger ("Brille") und separaten Steckermodulen besteht, welche mit dem Modulträger verbunden werden. Der Herstellungsprozess kann dadurch vereinfacht und die Herstellungstaktzeit verkürzt werden.

Bei der Herstellung des monolithischen Kunststoffbauteils kann eine eingesetzte Kunststoffspritzgießtechnik mit der Gasinnendruckspritzgießtechnik kombiniert werden, durch welche die Hohlraumstruktur in den Kontaktträger eingebracht werden kann. Durch die erzeugte Hohlraumstruktur kann ein Bauteilverzug in vorteilhafter Weise zumindest minimiert oder gänzlich eliminiert und somit das "monolithische" Kunststoffbauteil für die hochpolige Steckerleiste mit großen Abmessungen dimensionsstabil gefertigt und problemlos montiert werden. Die Gasinnendruckspritzgießtechnik ermöglicht durch sequentielles Einspritzen von Kunststoffschmelze (zuerst) und nachgeschaltetem Gaseinspritzen die Herstellung von versteifenden Hohlraumstrukturen. Die über die Gasinnendruckspritzgießtechnik erzeugten Hohlraumstrukturen können zudem schwindungskompensierend wirken. Zur Erzeugung der Hohlraumstrukturen können am Kontaktträger der Steckerleiste spezielle Bereiche, sogenannte Gaskanäle, partiell und gezielt aufgedickt werden, über welche dann das einströmende Gas (Stickstoff) die zuerst eingespritzte Kunststoffschmelze an die Werkzeugformeinsatzwandung andrückt und somit eine versteifende Hohlraumstruktur erzeugt. In vorteilhafter Weise kann die Gasinnendruckspritzgießtechnik auf Standardspritzgießmaschinen eingesetzt werden, welche mit einer Einrichtung und Steuerung von Gaseinspritzung erweitert ist. Das Gas kann man entweder rückgewinnen oder gezielt entweichen lassen.

Ausführungsformen der vorliegenden Erfindung stellen eine Steckerleiste für ein Steuergerät zur Verfügung, welches einen Kontaktträger umfasst, in welchem eine Mehrzahl von Kontaktelementen über eine Teillänge derselben eingebettet und gelagert ist. Die Kontaktelemente weisen Kontaktabschnitte auf, welche an einer Vorderseite aus dem Kontaktträger austreten und in mindestens einem einseitig offenen Steckermodul freiliegend angeordnet sind, welches geeignet ist, einen Gegenstecker aufzunehmen. Zudem sind der Kontaktträger und das mindestens eine Steckermodul als monolithisches Kunststoffbauteil hergestellt, wobei am Kontaktträger eine Hohlraumstruktur mit mindestens einem Kanal ausgebildet ist, welche den Kontaktträger versteift.

Durch die in den abhängigen Ansprüchen aufgeführten Maßnahmen und Weiterbildungen sind vorteilhafte Verbesserungen der im unabhängigen Patentanspruch 1 angegebenen Steckerleiste für ein Steuergerät möglich.

Besonders vorteilhaft ist, dass die Kontaktelemente Anschlussabschnitte aufweisen können, welche an einer Rückseite aus dem Kontaktträger austreten und zu einer Führungsleiste hin abgebogen sein können und durch zugeordnete Positionierungsbohrungen in der Führungsleiste geführt werden können.

In vorteilhafter Ausgestaltung der Steckerleiste kann der Kontaktträger an der Rückseite eine umlaufende innere Auskragung aufweist, welche im gefügten Zustand ins Innere des Steuergeräts ragen kann. An der inneren Auskragung kann eine erste Dichtgeometrie ausgebildet werden, welche dichtend mit einer korrespondierenden zweiten Dichtgeometrie im Steuergerätegehäuse zusammenwirkt. Die erste und zweite Dichtgeometrie können beispielsweise als Flachdichtungen oder als Dichtfeder und Dichtnut oder auch als eine Kombination aus Dichtfeder und Flachdichtung ausgeführt werden.

In weiterer vorteilhafter Ausgestaltung der Steckerleiste kann der mindestens eine Kanal der Hohlraumstruktur am Übergang zwischen dem Kontaktträger und der umlaufenden inneren Auskragung angeordnet werden und eine korrespondierende Verdickung ausbilden. Durch diese Anordnung bzw. durch geeignete Auslegung der Hohlraumstruktur kann in vorteilhafter Weise vermieden werden, dass das einströmende Gas in dichtungskritische Bereiche strömt. Zudem kann am Übergang zwischen dem Kontaktträger und der umlaufenden inneren Auskragung eine erste Einschnürung ausgebildet werden. Zusätzlich oder alternativ kann am Übergang zwischen der Verdickung und dem Kontaktträger eine zweite Einschnürung ausgebildet werden. Diese geometrischen Einschnürungen bzw. Querschnittsbegrenzungen können in vorteilhafter Weise als Barriere oder Bremse für das einströmende Gas dienen und können verhindern, dass das Gas in andere Geometriebereiche einströmt. Die Rückgewinnung des Gases bzw. die Gas-Entweichung kann ebenfalls über bestimmte Bereiche erfolgen, an denen keine Undichtigkeit entstehen kann.

In weiterer vorteilhafter Ausgestaltung der Steckerleiste können mehrere Steckermodule an der Vorderseite des Kontaktträgers angeordnet werden, wobei die Kontaktelemente von zwei benachbarten Steckermodulen an der Rückseite des Kontaktträgers durch eine Trennwand voneinander getrennt werden können. Dadurch können mehrere Gegenstecker von verschiedenen Kabelbaumabschnitten über die Steckermodule mit dem Steuergerät elektrisch kontaktiert werden. Die Steckermodule können verschiedene Abmessungen aufweisen. Zudem können in den Steckermodulen mechanische Kodier- und/oder Führungselemente und/oder Berührschutzelemente vorgesehen werden, um das ordnungsgemäße und lage- und positionsrichtige Einstecken der Gegenstecker in die Steckermodule zu erleichtern.

In weiterer vorteilhafter Ausgestaltung der Steckerleiste kann am Kontaktträger mindestens ein Befestigungselement ausgebildet werden, welches geeignet ist, den Kontaktträger mit einer Leiterplatte zu fügen. Ein solches Befestigungselemente kann beispielsweise als Zentrierzapfen ausgeführt werden, welche in eine korrespondierende Öffnung in der Leiterplatte eingeführt werden kann. Zudem kann der Kontaktträger mehrere Ausleger aufweisen, welche geeignet sind, den Kontaktträger im gefügten Zustand auf einer Leiterplatte abzustützen. Durch die Ausleger kann sichergestellt werden, dass die Anschlussabschnitte der Kontaktelemente ausreichend tief in korrespondierende Kontaktöffnungen der Leiterplatte eingeführt sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Vorderansicht eines Ausführungsbeispiels einer erfindungsgemäßen Steckerleiste für ein Steuergerät.
Fig. 2 zeigt eine schematische perspektivische Rückansicht der erfindungsgemäßen Steckerleiste für ein Steuergerät aus Fig. 1.
Fig. 3 zeigt eine Schnittdarstellung der erfindungsgemäßen Steckerleiste für ein Steuergerät aus Fig. 1 und 2.

### Ausführungsformen der Erfindung

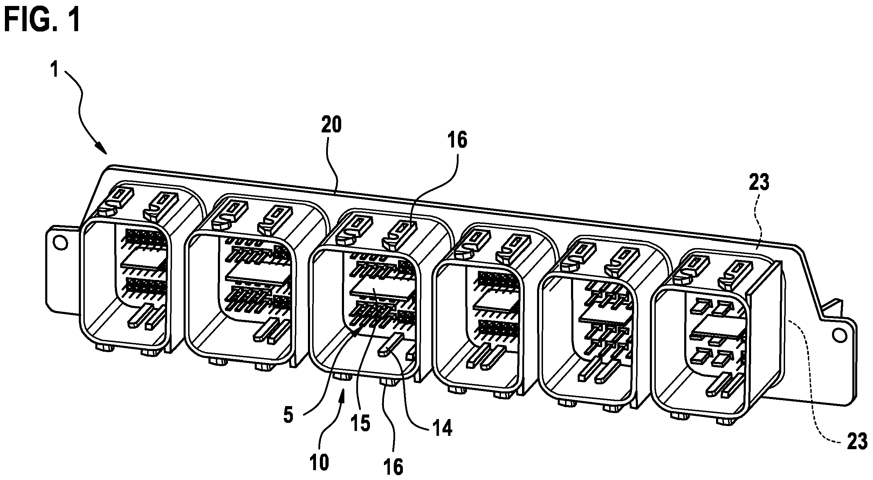

Wie aus Fig. 1 bis 3 ersichtlich ist, umfasst das dargestellte Ausführungsbeispiel einer erfindungsgemäßen hochpoligen Steckerleiste 1 für ein Steuergerät einen Kontaktträger 20, in welchem eine Mehrzahl von Kontaktelementen 5 über eine Teillänge derselben eingebettet und gelagert ist. Die Kontaktelemente 5 weisen Kontaktabschnitte 5.1 auf, welche an einer Vorderseite 20.1 aus dem Kontaktträger 20 austreten und in mindestens einem einseitig offenen Steckermodul 10 freiliegend angeordnet sind, welches geeignet ist, einen nicht dargestellten Gegenstecker aufzunehmen. Die Kontaktabschnitte 5.1 der Kontaktelemente 5 sind zur Kontaktierung mit nicht näher dargestellten Gegenkontaktelementen des Gegensteckers vorgesehen, welcher in das korrespondierende Steckermodul 10 eingeschoben wird. Der Kontaktträger 20 und das mindestens eine Steckermodul 10 sind als monolithisches Kunststoffbauteil hergestellt, wobei am Kontaktträger 20 eine Hohlraumstruktur mit mindestens einem Kanal 23 ausgebildet ist, welche den Kontaktträger 20 versteift.

Im dargestellten Ausführungsbeispiel ist das monolithische Kunststoffbauteil mittels Kunststoffspritzgießtechnik hergestellt, wobei die Hohlraumstruktur mittels Gasinnendruckspritzgießtechnik in den Kontaktträger 20 eingebracht ist.

Wie aus Fig. 1 bis 3 weiter ersichtlich ist, weisen die Kontaktelemente 5 Anschlussabschnitte 5.2 auf, welche an der Rückseite 20.2 aus dem Kontaktträger 20 austreten und zu einer Führungsleiste 3 hin abgebogen sind und durch zugeordnete Positionierungsbohrungen in der Führungsleiste 3 geführt sind. Der durch die Führungsleiste 3 hindurchtretende Anschlussabschnitt 5.2 des jeweiligen Kontaktelements 5 wird durch eine zugeordnete Bohrung in einer nicht dargestellten Leiterplatte gesteckt und mit mindestens einer Kontaktstelle der Leiterplatte elektrisch kontaktiert.

Wie aus Fig. 1 bis 3 weiter ersichtlich ist, weist der Kontaktträger 20 im dargestellten Ausführungsbeispiel an der Rückseite 20.2 eine umlaufende innere Auskragung 22 auf, welche im gefügten Zustand ins Innere des nicht näher dargestellten Steuergeräts ragt. Am oberen Abschnitt der Auskragung 22 ist eine Dichtfeder 27 ausgebildet, welche dichtend mit einer korrespondierenden nicht dargestellten Dichtnut im Steuergerätegehäuse zusammenwirkt.

Wie aus Fig. 1 bis 3 weiter ersichtlich ist, ist der mindestens eine Kanal 23 der Hohlraumstruktur am Übergang zwischen dem Kontaktträger 20 und der umlaufenden inneren Auskragung 22 angeordnet und bildet eine korrespondierende Verdickung 23A aus. Im dargestellten Ausführungsbeispiel weist die Hohlraumstruktur im oberen und unteren Abschnitt der inneren Auskragung 22 jeweils einen horizontal verlaufenden Kanal 23 und im linken und rechten Abschnitt der inneren Auskragung 22 jeweils einen vertikal verlaufenden Kanal 23 auf. Bei einem alternativen nicht dargestellten Ausführungsbeispiel sind zusätzlich zu den äußeren vertikalen Kanälen weitere senkrecht verlaufende Kanäle zwischen den beiden horizontal verlaufenden Kanälen im Kontaktträger vorgesehen. Alternativ kann die Hohlraumstruktur im Kontaktträger nur horizontal verlaufende Kanäle und keine vertikal verlaufende Kanäle aufweisen.

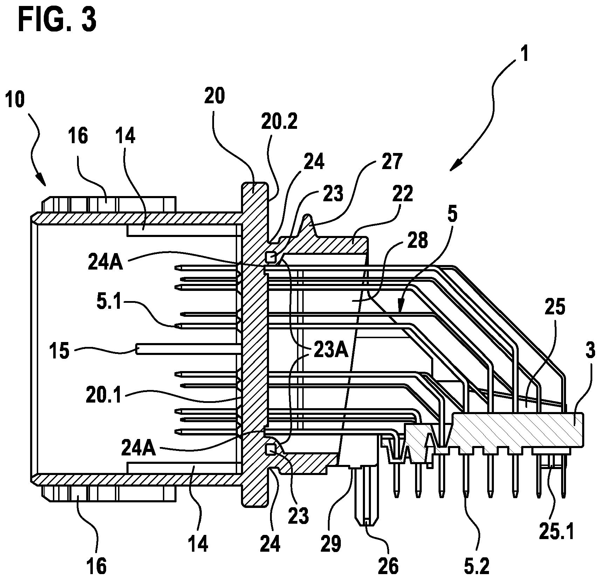

Wie aus Fig. 3 weiter ersichtlich ist, ist im dargestellten Ausführungsbeispiel am Übergang zwischen dem Kontaktträger 20 und der umlaufenden inneren Auskragung 22 eine erste Einschnürung 24 ausgebildet. Am Übergang zwischen der Verdickung 23A und dem Kontaktträger 20 ist im dargestellten Ausführungsbeispiel eine zweite Einschnürung 24A ausgebildet.

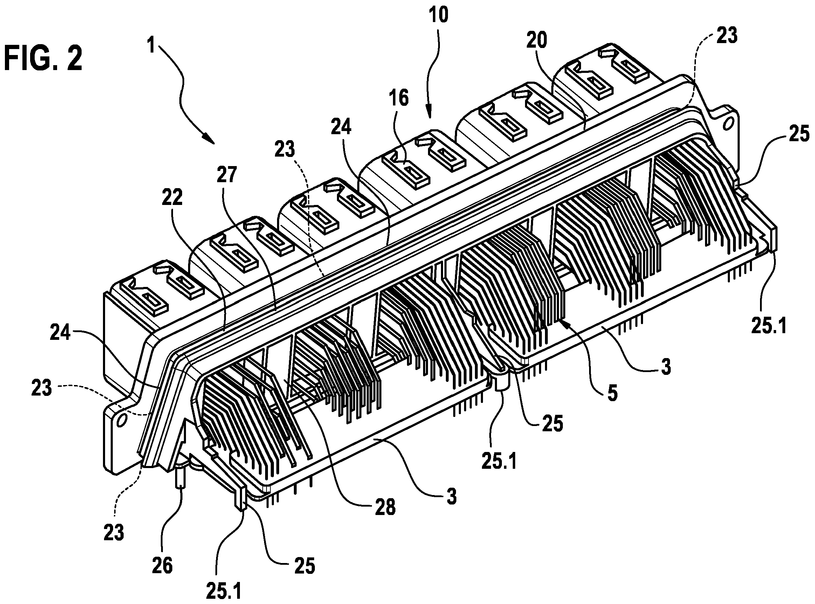

Wie aus Fig. 1 und 2 weiter ersichtlich ist, weist die Steckerleiste 1 sechs an der Vorderseite 20.1 des Kontaktträger 20 angeordnete Steckermodule 10 auf. Hierbei sind die Kontaktelemente 5 von zwei benachbarten Steckermodulen 10 an der Rückseite 20.2 des Kontaktträgers 20 durch eine Trennwand 28 voneinander getrennt. Dadurch können mehrere Gegenstecker von verschiedenen Kabelbaumabschnitten über die Steckermodule 10 mit dem Steuergerät elektrisch kontaktiert werden. Die Steckermodule 10 können verschiedene Abmessungen aufweisen. Zudem sind an Innenwänden der Steckermodule 10 mechanische Kodier- und/oder Führungselemente 14 vorgesehen, um das ordnungsgemäße und lage- und positionsrichtige Einstecken der Gegenstecker in die Steckermodule 10 zu erleichtern. Des Weiteren sind im Inneren der Steckermodule 10 Berührschutzrippen 15 zum Schutz der Kontaktabschnitte 5.1 ausgebildet. Zudem sind an oberen und unteren Außenwänden der Steckermodule 10 Verriegelungselemente 16 angeordnet, welche beim Einschieben der Gegenstecker mit entsprechenden Verriegelungselementen des Gegensteckers zusammenwirken, um eine geforderte Kontaktkraft zu erzeugen.

Wie aus Fig. 1 bis 3 weiter ersichtlich ist, sind am Kontaktträger 20 mehrere als Zentrierzapfen ausgeführte Befestigungselemente 26 ausgebildet, welche geeignet sind, den Kontaktträger 20 mit der Leiterplatte zu fügen. Zudem weist der Kontaktträger 20 im dargestellten Ausführungsbeispiel drei Ausleger 25 auf, welche geeignet sind, den Kontaktträger 20 im gefügten Zustand auf einer Leiterplatte abzustützen. Beim Fügen des Kontaktträgers 20 mit der nicht dargestellten Leiterplatte werden die als Zentrierzapfen ausgeführten Befestigungselemente 26 in korrespondierende Öffnungen in der Leiterplatte eingeführt, bis die Leiterplatte an einem am unteren Abschnitt der inneren Auskragung 22 ausgebildeten Anlagebereich 29 und an Auflagen 25.1 anliegt, welche an den Auslegern 25 ausgebildet sind. Dadurch wird die vorgeschriebene Einführtiefe für die Anschlussabschnitte 5.2 der Kontaktelemente 5 in den korrespondierenden Öffnungen der Leiterplatte ermöglicht.

Durch den Einsatz der Gasinnendruckspritzgießtechnik und entsprechend geeigneter Konstruktionsauslegung können Ausführungsformen der erfindungsgemäßen hochpoligen Steckerleiste mit bis zu 340 oder mehr Kontaktelementen in vorteilhafter Weise "monolithisch" mit einer versteifenden Hohlraumstruktur und ohne aufwendigen und zusätzlichen Verbindungsprozess gefertigt werden.

## Patentansprüche

1. Steckerleiste (1) für ein Steuergerät, mit einem Kontaktträger (20), in welchem eine Mehrzahl von Kontaktelementen (5) über eine Teillänge derselben eingebettet und gelagert ist, wobei die Kontaktelemente (5) Kontaktabschnitte (5.1) aufweisen, welche an einer Vorderseite (20.1) aus dem Kontaktträger (20) austreten und in mindestens einem einseitig offenen Steckermodul (10) freiliegend angeordnet sind, welches geeignet ist, einen Gegenstecker aufzunehmen, wobei der Kontaktträger (20) und das mindestens eine Steckermodul (10) als monolithisches Kunststoffbauteil hergestellt sind, **dadurch gekennzeichnet, dass** am Kontaktträger (20) eine Hohlraumstruktur mit mindestens einem Kanal (23) ausgebildet ist, welche den Kontaktträger (20) versteift.

2. Steckerleiste nach Anspruch 1, **dadurch gekennzeichnet, dass** die Kontaktelemente (5) Anschlussabschnitte (5.2) aufweisen, welche an einer Rückseite (20.2) aus dem Kontaktträger (20) austreten und zu einer Führungsleiste (3) hin abgebogen sind und durch zugeordnete Positionierungsbohrungen in der Führungsleiste (3) geführt sind.

3. Steckerleiste nach Anspruch 1 oder 2, **dadurch gekennzeichnet, dass** der Kontaktträger (20) an der Rückseite (20.2) eine umlaufende innere Auskragung (22) aufweist, welche im gefügten Zustand ins Innere des Steuergeräts ragt.

4. Steckerleiste nach Anspruch 3, **dadurch gekennzeichnet, dass** der mindestens eine Kanal (23) der Hohlraumstruktur am Übergang zwischen dem Kontaktträger (20) und der umlaufenden inneren Auskragung (22) angeordnet ist und eine korrespondierende Verdickung (23A) ausbildet.

5. Steckerleiste nach Anspruch 4, **dadurch gekennzeichnet, dass** am Übergang zwischen dem Kontaktträger (20) und der umlaufenden inneren Auskragung (22) eine erste Einschnürung (24) ausgebildet ist.

6. Steckerleiste nach Anspruch 4 oder 5, **dadurch gekennzeichnet, dass** am Übergang zwischen der Verdickung (23A) und dem Kontaktträger (20) eine zweite Einschnürung (24A) ausgebildet ist.

7. Steckerleiste nach einem der Ansprüche 1 bis 6, **dadurch gekennzeichnet, dass** mehrere Steckermodule (10) an der Vorderseite (20.1) des Kontaktträgers (20) angeordnet sind, wobei die Kontaktelemente (5) von zwei benachbarten Steckermodule (10) an der Rückseite (20.2) des Kontaktträgers (20) durch eine Trennwand (28) voneinander getrennt sind.

8. Steckerleiste nach einem der Ansprüche 1 bis 7, **dadurch gekennzeichnet, dass** am den Kontaktträger (20) mindestens ein Befestigungselement (26) ausgebildet ist, welches geeignet ist, den Kontaktträger (20) mit einer Leiterplatte zu fügen.

9. Steckerleiste nach einem der Ansprüche 1 bis 8, **dadurch gekennzeichnet, dass** der Kontaktträger (20) mehrere Ausleger (25) aufweist, welche geeignet sind, den Kontaktträger (20) im gefügten Zustand auf einer Leiterplatte abzustützen.

10. Steckerleiste nach einem der Ansprüche 1 bis 9, **dadurch gekennzeichnet, dass** das monolithisches Kunststoffbauteil mittels Kunststoffspritzgießtechnik hergestellt ist, wobei die Hohlraumstruktur mittels Gasinnendruckspritzgießtechnik in den Kontaktträger (20) eingebracht ist.

## Claims

1. Plug strip (1) for a control device, comprising a contact carrier (20) in which a plurality of contact elements (5) are embedded and mounted over a partial length of the said contact carrier, wherein the contact elements (5) have contact sections (5.1) which exit from the contact carrier (20) at a front side (20.1) and are arranged in an exposed manner in at least one plug module (10) which is open on one side and which is suitable for receiving a mating plug, wherein the contact carrier (20) and the at least one plug module (10) are produced as a monolithic plastic component, **characterized in that** a cavity structure with at least one duct (23) is formed on the contact carrier (20), which cavity structure reinforces the contact carrier (20).

2. Plug strip according to Claim 1, **characterized in that** the contact elements (5) have connection sections (5.2) which exit from the contact carrier (20) at a rear side (20.2) and are bent away in the direction of a guide strip (3) and are guided through associated positioning holes in the guide strip (3).

3. Plug strip according to Claim 1 or 2, **characterized in that** the contact carrier (20) has an encircling inner projection (22) at the rear side (20.2), which projection protrudes into the interior of the control device in the joined state.

4. Plug strip according to Claim 3, **characterized in that** the at least one duct (23) of the cavity structure is arranged at the transition between the contact carrier (20) and the encircling inner projection (22) and forms a corresponding thickened portion (23A).

5. Plug strip according to Claim 4, **characterized in that** a first constricted portion (24) is formed at the transition between the contact carrier (20) and the encircling inner projection (22).

6. Plug strip according to Claim 4 or 5, **characterized in that** a second constricted portion (24A) is formed at the transition between the thickened portion (23A) and the contact carrier (20).

7. Plug strip according to one of Claims 1 to 6, **characterized in that** a plurality of plug modules (10) are arranged at the front side (20.1) of the contact carrier (20), wherein the contact elements (5) of two adjacent plug modules (10) are separated from one another by a partition wall (28) at the rear side (20.2) of the contact carrier (20).

8. Plug strip according to one of Claims 1 to 7, **characterized in that** at least one fastening element (26) is formed on the contact carrier (20), which fastening element is suitable for joining the contact carrier (20) to a printed circuit board.

9. Plug strip according to one of Claims 1 to 8, **characterized in that** the contact carrier (20) has a plurality of extension arms (25) which are suitable for supporting the contact carrier (20) on a printed circuit board in the joined state.

10. Plug strip according to one of Claims 1 to 9, **characterized in that** the monolithic plastic component is produced by means of plastic injection moulding technology, wherein the cavity structure is inserted into the contact carrier (20) by means of internal gas pressure injection moulding technology.

## Revendications

1. Barrette de connexion (1) pour un appareil de commande, comprenant un porte-contacts (20) dans lequel une pluralité d'éléments de contact (5) sont intégrés et montés sur une partie de leur longueur, dans lequel les éléments de contact (5) présentent des sections de contact (5.1) qui sortent du porte-contacts (20) sur une face avant (20.1) et qui sont disposées à découvert dans au moins un module de connexion (10), ouvert sur un côté, qui est conçu pour recevoir un connecteur complémentaire, dans lequel le porte-contacts (20) et ledit au moins un module de connexion (10) sont réalisés sous la forme d'un composant en plastique monolithique, **caractérisé en ce qu'**une structure à cavité comprenant au moins un canal (23) est formée sur le porte-contacts (20), laquelle renforce le porte-contacts (20).

2. Barrette de connexion selon la revendication 1, **caractérisée en ce que** les éléments de contact (5) présentent des sections de connexion (5.2) qui sortent du porte-contacts (20) sur une face arrière (20.2) et sont repliées vers une barrette de guidage (3) et sont guidées par des perçages de positionnement associés dans la barrette de guidage (3).

3. Barrette de connexion selon la revendication 1 ou 2, **caractérisée en ce que** le porte-contacts (20) présente, sur la face arrière (20.2), une saillie intérieure périphérique (22) qui, à l'état assemblé, fait saillie à l'intérieur de l'appareil de commande.

4. Barrette de connexion selon la revendication 3, **caractérisée en ce que** ledit au moins un canal (23) de la structure à cavité est disposé au niveau de la transition entre le porte-contacts (20) et la saillie intérieure périphérique (22) et forme une partie épaissie correspondante (23A).

5. Barrette de connexion selon la revendication 4, **caractérisée en ce qu'**un premier rétrécissement (24) est réalisé au niveau de la transition entre le porte-contacts (20) et la saillie intérieure périphérique (22).

6. Barrette de connexion selon la revendication 4 ou 5, **caractérisée en ce qu'**un deuxième rétrécissement (24A) est réalisé au niveau de la transition entre la partie épaissie (23A) et le porte-contacts (20).

7. Barrette de connexion selon l'une des revendications 1 à 6, **caractérisée en ce que** plusieurs modules de connexion (10) sont disposés sur la face avant (20.1) du porte-contacts (20), dans laquelle les éléments de contact (5) de deux modules de connexion adjacents (10) sont séparés l'un de l'autre par une cloison (28) sur la face arrière (20.2) du porte-contacts (20).

8. Barrette de connexion selon l'une des revendications 1 à 7, **caractérisée en ce qu'**au moins un élément de fixation (26) est réalisé sur le porte-contacts (20), lequel élément de fixation est adapté pour relier le porte-contacts (20) à une carte de circuit imprimé.

9. Barrette de connexion selon l'une des revendications 1 à 8, **caractérisée en ce que** le porte-contacts (20) présente plusieurs bras (25) qui sont adaptés pour supporter le porte-contacts (20) à l'état assemblé sur une carte de circuit imprimé.

10. Barrette de connexion selon l'une des revendications 1 à 9, **caractérisée en ce que** le composant en plastique monolithique est réalisé au moyen d'une technique de moulage par injection de plastique, dans laquelle la structure à cavité est insérée dans le porte-contacts (20) au moyen d'une technique de moulage par injection sous pression interne de gaz.
